# NEUE EUROPÄISCHE PATENTSCHRIFT

(11) **EP 0 914 985 B2**
(45) Veröffentlichungstag und Bekanntmachung des Hinweises auf die Entscheidung über den Einspruch: **13.09.2006**
(45) Hinweis auf die Patenterteilung: 30.07.2003
(21) Anmeldenummer: 98119855.9
(22) Anmeldetag: 20.10.1998
(51) Int. Cl.: B60N 2/48

(54) **Rückenlehne eines Kraftfahrzeugsitzes mit einer Kopfstütze**
Vehicle seat backrest with headrest
Dossier de siège de véhicule comportant appuie-tête

(30) Priorität: 04.11.1997 DE 19748594
(43) Veröffentlichungstag der Anmeldung: 12.05.1999
(73) Patentinhaber: Bayerische Motoren Werke Aktiengesellschaft, 80788 München (DE)
(72) Erfinder: Beerbaum, Peter, 85391 Allershausen (DE)

(56) Entgegenhaltungen:
- DE-A- 3 939 453
- DE-A- 4 216 584
- DE-A- 4 325 996
- DE-A- 4 407 519
- JP-A- 5 170 021
- US-A- 4 765 683
- US-A- 5 288 129
- US-A- 5 433 508
- US-A- 5 590 933
- US-A- 5 626 396

## Beschreibung

Die Erfindung bezieht sich auf eine Rückenlehne eines Kraftfahrzeugsitzes wie er aus der US-A-5 433 508 hervorgeht.

Bei dem aus dieser Druckschrift bekannten Kraftfahrzeugsitz besteht das obere Rahmenquerteil der Rückenlehne aus einem Rohr, an dem im Bereich einer der beiden Tragstangen der Kopfstütze ein Blechgehäuse befestigt ist. Von diesem ist eine zum Höhenverstellen der Kopfstütze dienende Verstelleinrichtung aufgenommen, wobei diese aus einem Elektromotor mit Getriebe und einer von diesem betätigten Verstellspindel besteht. Diese wirkt ihrerseits mit einer Mutter zusammen, welche an einem die Tragstange der Kopfstütze haltenden Aufnahmeteil befestigt ist. Die Herstellung und Montage des Gehäuses und des Aufnahmeteils ist jedoch verhältnismäßig arbeitsaufwändig und damit teuer.

Der Stand der Technik gemäß dem Oberbegriff des Anspruchs ist bereits aus der DE 42 16 584 A1 bekannt.

Aufgabe der Erfindung ist es daher, an einer mit einer Kopfstütze versehenen Rückenlehne der im Oberbegriff des Patentanspruchs 1 genannten Art die Verstelleinrichtung derart anzuordnen, daß sie vergleichsweise weniger Einzelteile aufweist sowie in einfacher Weise zu montieren ist und dabei auch eine Gewichtsverminderung erreicht wird.

Zur Lösung der Aufgabe sind die im Patentanspruch 1 dargelegten Merkmale vorgesehen.

Da das obere Rahmenquerteil erfindungsgemäß insgesamt als ein Hohlprofil ausgebildet ist, kann in dessen Hohlraum die Verstelleinrichtung vorteilhafterweise unmittelbar angeordnet werden, so dass sich eine spezielle, außerhalb des oberen Rahmenquerteils liegende Aufnahme für die Verstelleinrichtung erübrigt und damit auch eine Gewichtsverminderung erreicht wird. Die Verstelleinrichtung kann somit rasch und auch in einfacher Weise, nämlich durch die bloße Anordnung im Hohlraum des Hohlprofils montiertwerden, wobei bei dieser Befestigungsart auch weniger Einzelteile erforderlich sind. Durch die unmittelbare Anordnung der Verstelleinrichtung im Hohlraum des Hohlprofils wird schließlich auch die ästhetische Wirkung der Rückenlehne verbessert.

Zweckmäßigerweise besteht das obere Rahmenquerteil aus einem U-förmigen Querschnittsprofil, in dessen zwischen seinen beiden Schenkeln liegenden Hohlraum sich die Verstelleinrichtung befindet. Dabei ist an den beiden Schenkeln eine Deckplatte angebracht und damit die Verstelleinrichtung in optimaler Weise untergebracht. Schließlich besteht die Verstelleinrichtung aus einem erfindungsgemäß Getriebe mit angeflanschtem Elektromotor

Ein Ausführungsbeispiel der Erfindung ist in der Zeichnung dargestellt und wird im folgenden erläutert. Es zeigt:
- Fig. 1: eine perspektivische Darstellung des oberen Endbereichs der Rückenlehne eines Kraftfahrzeugsitzes mit Kopfstütze,
- Fig. 2: eine Teilansicht in Pfeilrichtung A von Fig. 1.

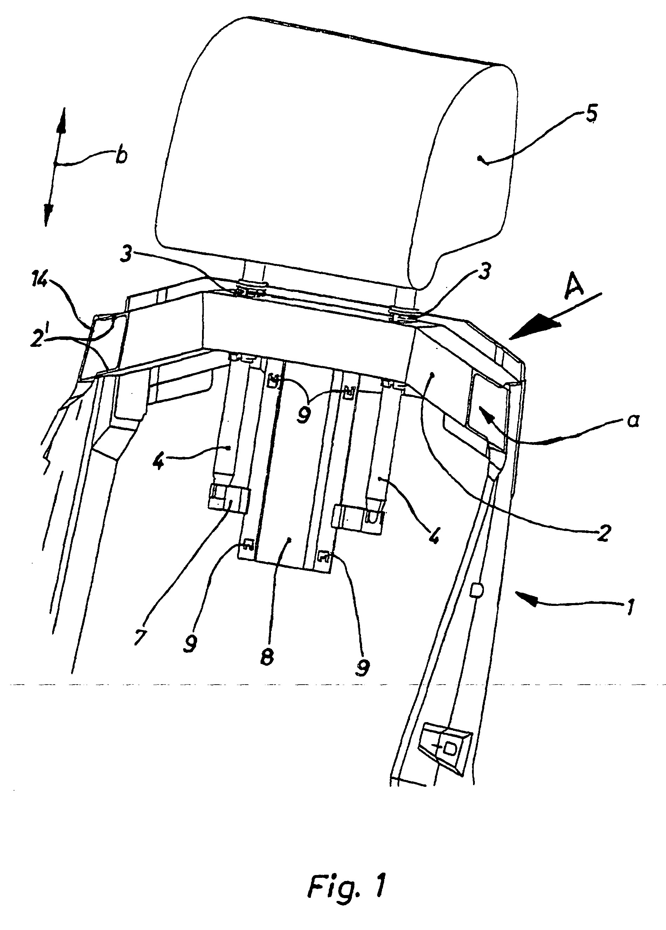

Die in Fig. 1 dargestellte Rückenlehne 1 eines Kraftfahrzeugsitzes hat ein oberes Rahmenquerteil 2, das ein U-förmiges Querschnittsprofil mit einem zwischen dessen Schenkeln 2' liegenden Hohlraum a aufweist; dieser befindet sich somit an der Rückseite der Rückenlehne 1.

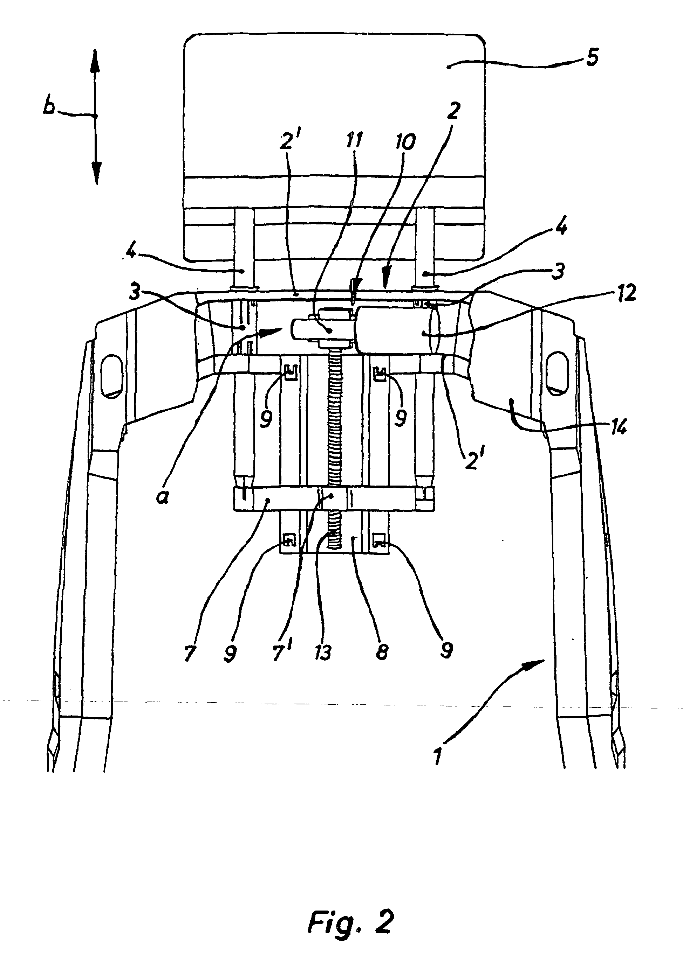

Wie in Fig. 2 ersichtlich, verlaufen zwischen den beiden Schenkeln 2' des oberen Rahmenquerteils 2 lotrecht zwei, im Abstand voneinander liegende Kopfstützenführungsteile 3, in denen jeweils eine Tragstange 4 einer Kopfstütze 5 in den Richtungen des Doppelpfeils b höhenverlagerbar angeordnet sind. Dabei sind die Tragstangen 4 an ihrem unteren Endabschnitt an einem Aufnahmeteil 7 befestigt, das an einem seinerseits am oberen Rahmenquerteil 2 angebrachten, lotrecht verlaufenden Führungsteil 8 höhenverlagerbar geführt ist.

Ferner ist in Fig. 2 ist ersichtlich, dass im Hohlraum a des oberen Rahmenquerteils 2 eine an diesem befestigte Verstelleinrichtung 10 angeordnet ist, die aus einem Getriebe 11 und einem an diesem angeflanschten Elektromotor 12 besteht. Dabei wird über das vom Elektromotor 12 angetriebene Getriebe 11 eine ihrerseits in eine Mutter 7' des Aufnahmeteils 7 eingeschraubte Verstellspindel 13 drehangetrieben, so dass bei deren Rotation die Tragstangen 4 und damit die Kopfstütze 5 in den Richtungen des Doppelpfeils b zwischen den am Führungsteil 8 ausgebildeten Anschlägen 9 höhenverlagert wird. Schließlich ist an den beiden Schenkeln 2' des oberen Rahmenquerteils 2 eine Deckplatte 14 angebracht.

## Patentansprüche

1. Rückenlehne (1) eines Fahrzeugsitzes mit einer Kopfstütze (5), welche über eine im Bereich eines oberen Rahmenquerteils (2) der Rückenlehne (1) vorgesehene und sich dabei in einem Hohlraum (a) befindende Verstelleinrichtung (10) höhenverlagerbar ist, wobei das obere Rahmenquerteil (2) zur unmittelbaren Aufnahme der Verstelleinrichtung (10), als ein entsprechend dimensioniertes Hohlprofil ausgebildet ist, **dadurch gekennzeichnet, dass** die Verstelleinrichtung (10) aus einem Getriebe (11) mit angeflanschtem Elektromotor (12) besteht.

2. Rückenlehne nach Anspruch 1,
**dadurch gekennzeichnet, dass** das obere Rahmenquerteil (2) aus einem U-förmigen Querschnittsprofil besteht, in dessen zwischen seinen beiden Schenkeln (2') liegendem Hohlraum (a) die Verstelleinrichtung (10) angeordnet ist.

3. Rückenlehne nach Anspruch 2,
**dadurch gekennzeichnet, dass** an den beiden Schenkeln (2') des U-förmigen Querschnittsprofils des oberen Rahmenquerteils (2) eine Deckplatte (14) angebracht ist.

4. Rückenlehne nach einem der Ansprüche 1 bis 3,
**dadurch gekennzeichnet, dass** die Verstelleinrichtung (10) aus einem eine Verstellspindel (13) antreibenden Getriebe (11) mit angeflanschtem Elektromotor (12) besteht.

## Claims

1. A back rest (1) of a vehicle seat with a head rest (5) which is vertically movable by an adjusting device (10) disposed in a cavity (a) in an upper transverse frame part (2) of the back rest (1), wherein upper transverse frame part (2) is a hollow profile suitably dimensioned for directly receiving the adjusting means (10),
**characterised in that** the adjusting device (10) comprises a drive unit (11) with a flange-mounted electric motor (12).

2. A back rest according to claim 1,
**characterised in that** the upper transverse frame part (2) comprises a U-shaped cross-sectional profile having two limbs (2') between which the adjusting device (10) is disposed in a cavity (a).

3. A back rest according to claim 2,
**characterised in that** a cover plate (14) is mounted on the two limbs (2') of the U-shaped cross-sectional profile of the upper transverse frame part (2).

4. A back rest according to any of claims 1 to 3,
**characterised in that** the adjusting device (10) comprises a drive unit (11) with a flange-mounted electric motor (12) for driving an adjusting spindle (13).

## Revendications

1. Dossier (1) de siège de véhicule comportant un appuie-tête (5) réglable en hauteur par une installation de réglage (11) prévue au niveau de la traverse supérieure (2) du dossier (1) dans une cavité (a), la traverse supérieure (2) étant réalisée sous la forme d'un profil creux dimensionné pour recevoir directement l'installation de réglage (10)
**caractérisé en ce que**,
l'installation de réglage (10) se compose d'une transmission (11) fixée par bride au moteur électrique (12).

2. Dossier de siège selon la revendication 1,
**caractérisé en ce que**
la traverse supérieure (2) est formée d'un profil à section en U dont la cavité (a) comprise entre les deux branches (2') reçoit l'installation de réglage (10).

3. Dossier selon la revendication 2,
**caractérisé en ce qu'**
une plaque d'habillage (14) est fixée sur les deux branches (2') du profil à section en forme de U de la traverse supérieure (2).

4. Dossier selon l'une des revendications 1 à 3,
**caractérisé en ce que**
l'installation de réglage (10) se compose d'un moteur électrique (12) auquel est fixée par brides une transmission (11) entraînant une broche de réglage (13).
